# EUROPÄISCHE PATENTSCHRIFT

(11) **EP 1 202 784 B1**
(45) Veröffentlichungstag und Bekanntmachung des Hinweises auf die Patenterteilung: **02.04.2003**
(21) Anmeldenummer: 00945761.5
(22) Anmeldetag: 16.06.2000
(51) Int. Cl.: B01D 3/34, B01D 1/28, C02F 1/04, B01D 3/06

(54) **VERFAHREN UND VORRICHTUNG ZUR AUFBEREITUNG EINER ABFALLFLÜSSIGKEIT**
METHOD AND DEVICE FOR TREATING LIQUID WASTES
PROCEDE ET DISPOSITIF POUR LE TRAITEMENT D'UN EFFLUENT LIQUIDE

(30) Priorität: 09.07.1999 DE 19931866
(43) Veröffentlichungstag der Anmeldung: 08.05.2002
(73) Patentinhaber: Neubert, Susanne, 71134 Aidlingen (DE)
(72) Erfinder: NEUBERT, Joachim, D-24980 Nordhackstedt (DE); TALLAFUSS, Peter, D-71258 Weil der Stadt (DE); STAAB, Karl-Ferdinand, D-71263 Weil der Stadt (DE)
(74) Vertreter: Neubauer, Hans-Jürgen, Dipl.-Phys.
(86) Internationale Anmeldenummer: EP0005551
(87) Internationale Veröffentlichungsnummer: WO01003794

(56) Entgegenhaltungen:
- EP-A- 0 363 838
- DE-A- 19 741 806

## Beschreibung

Die Erfindung betrifft ein Verfahren zur Aufbereitung einer Abfallflüssigkeit nach dem Oberbegriff des Anspruchs 1 sowie eine Vorrichtung zur Aufbereitung einer Abfallflüssigkeit nach dem Oberbegriff des Anspruchs 14.

Ein derartiges Verfahren und Vorrichtung zur Aufbereitung einer Abfallflüssigkeit sind aus der gattungsgemäßen EP 0 142 018 B1 bekannt, bei dem eine Abwasserflüssigkeit, die aus einer Basisflüssigkeit und darin vorhandenen, nicht verdampfbaren Feststoffverunreinigungen besteht, in einen Trägergasstrom eingebracht wird. Anschließend wird dieses Gemisch in einem Verdampfer bis zu einer Temperatur erhitzt, die oberhalb der Sättigungstemperatur des bei der Erhitzung entstehenden Wasserdampfes liegt. Aus diesem überhitzten Trägergas-Dampfgemisch werden die Feststoffpartikel in einem Abscheider abgeschieden. Vom Abscheider ausgehend wird das Trägergas zuerst mittels eines Verdichters komprimiert und anschließend zur Aufheizung des zu reinigenden Gemisches aus Trägergas und Abfallflüssigkeit durch den Verdampfer geleitet. Gleichzeitig kühlt sich im Verdampfer durch diese Wärmeübertragung auch das von den Verunreinigungen befreite Trägergas-Trockendampfgemisch ab. Dabei kondensiert die Basisflüssigkeit, die als heißes Kondensat einem Wärmetauscher zur Vorerwärmung der Abfallflüssigkeit zugeführt wird, während andererseits das Trägergas dem Verdampfereingang zugeführt wird, an dem eine Mischung von Trägergas und vorerwärmter Abfallflüssigkeit stattfindet.

Dieses Verfahren ist geeignet, um in einer Abfallflüssigkeit enthaltene, nicht verdampfbare Feststoffe und/oder Substanzen zu gewinnen, insbesondere um einen Reinheitsgrad des abziehenden Dampfes zu erreichen, der in etwa dem Reinheitsgrad destillierten Wassers entspricht. Es hat sich jedoch gezeigt, daß vor allem bei einer Belastung einer Abfallflüssigkeit mit im wesentlichen flüssigen Verunreinigungen, wie z. B. ölhaltigen organischen Stoffen, es zu Inkrustationen auf der Verdampferseite des Wärmetauschers kommen kann, die eine häufige Reinigung des Wärmetauschers erfordern. Ferner kommt es bei der Abscheidung sowie bei der Trennung von Trägergas und Kondensat im Verdampfer in der Regel zu nicht unerheblichen Verlusten an Trägergas, was sich auf die Dauer nachteilig auf eine optimale Prozeßführung auswirkt.

Aus der DE 197 41 806 A1 ist ebenfalls ein gattungsgemäßes Verfahren mit dazugehöriger Vorrichtung zur Aufbereitung von Abfallflüssigkeit, die aus einer Basisflüssigkeit und darin enthaltenen Verunreinigungen besteht, bekannt. Hier wird die zu reinigende Abfallflüssigkeit in einem Trägergasstrom verteilt, in einem Wärmetauscher vorgewärmt und anschließend in einem Abscheider die Verunreinigungen als Konzentrat abgeschieden. Das Konzentrat wird in einem dem Konzentratabscheider nachgeschalteten Verdampfer mit Brüdenkompression bei Temperaturen bis 170°C nachgetrocknet, wobei das Brüdenkondensat in das überhitzte Trägergas-Dampfgemisch zurückgefördert und mit diesem gemischt wird. Das nach der Abscheidung der Verunreinigungen gereinigte Trägergas-Trockendampfgemisch wird anschließend in einem Verdichter komprimiert und zur Aufheizung des Gemisches aus vorerwärmter Abfallflüssigkeit und Trägergas einem Wärmetauscher zugeführt, wobei die Basisflüssigkeit als Kondensat kondensiert. Dieses Kondensat wird in einen als Stripper ausgebildeten Kondensatsammelbehälter geleitet und dort über eine Sprühdüse verdüst. Die hierbei frei werdenden, flüchtigen Bestandteile werden über eine Gasleitung durch in einem Flüssigkeitsbehälter vorhandenes, gekühltes Wasser geleitet, wobei die wasserlöslichen Bestandteile im Wasser gelöst werden, während das Restgas über eine Ausgangsleitung an die Umluft abgegeben wird. Das beim Verdüsen im Stripper verbleibende Kondensat wird am Boden gesammelt und zu einem Wärmetauscher geleitet, in welchem die noch vorhandene Restwärme zur Vorerwärmung auf die zu reinigende Abfallflüssigkeit übertragen wird.

Nachteilig hierbei ist, daß das Trägergas kontinuierlich in das System eingespeist werden muß, weil über den als Stripper ausgebildeten Kondensatsammelbehälter sowie den nachgeschalteten Kühlwasserbehälter ein großer Teil des Trägergases direkt an die Umgebungsluft abgegeben wird.

Weiterhin ist im Falle einer Naßoxidation der im Trägergas Luft vorhandene Sauerstoff ebenfalls einer Abnahme unterworfen, so daß durch eine Zufuhr von Luft Trägergas nachzusteuern ist. Dies bedeutet allerdings auch, daß ein erhöhter Trägergasaustrag über den Stripper erforderlich wird, um den erforderlichen Sauerstoffbedarf decken zu können. Da in diesem Fall die Wasservorlage in dem nachgeschalteten Kühlwasserbehälter ebenfalls einer erhöhten Belastung ausgesetzt ist, kommt es zu einem unerwünschten Austrag von dampfförmigen Trägergas-Inhaltsstoffen, die zu einer Umweltgefährdung führen.

Durch die Erhitzung der Brüden im Konzentratverdampfer auf Temperaturen von bis zu 170 °C wird ferner eine Verdampfung von Inhaltsstoffen des Konzentrats erreicht, die sich dann als Brüden niederschlagen und mit diesen in das Trägergas-Trockendampfgemisch eingespeist werden. Dadurch erfolgt eine unerwünschte sekundäre Kontamination bei der Kondensation des Dampfes des Trägergas-Trockendampfgemisches und somit eine vermeidbare Verschmutzung des Ablaufs.

Aufgabe der Erfindung ist es, ein gattungsgemäßes Verfahren und Vorrichtung zur Aufbereitung von Abfallflüssigkeiten so weiterzuentwickeln, daß unter zusätzlicher Reduzierung des Energieaufwands sowie der Trägergasverluste eine effektive und wirtschaftliche Verfahrensführung ermöglicht wird.

Diese Aufgabe wird bezüglich des Verfahrens mit den Merkmalen des Anspruchs 1 und bezüglich der Vorrichtung mit den Merkmalen des Anspruchs 14 gelöst.

Weitere vorteilhafte Ausgestaltung der Erfindung sind Gegenstand der Unteransprüche.

Gemäß Anspruch 1 erfolgt bei einem Verfahren zur Aufbereitung einer Abfallflüssigkeit, die aus einer Basisflüssigkeit mit darin enthaltenen, im wesentlichen flüssigen Verunreinigungen besteht, eine Trennung der Verunreinigungen ggf. zur Wertstoffrückgewinnung von der dadurch für eine umweltfreundliche Entsorgung oder Wiederverwertung gereinigten Basisflüssigkeit.

Dabei wird der vorerwärmten Abfallflüssigkeit ein Trägergas zugeführt und dieses Gemisch durch Wärmezufuhr zu einem nassen Trägergas-Dampfgemisch verdampft, so daß die Basisflüssigkeit verdampft und die flüssigen Verunreinigungen als Restflüssigkeitsanteil verbleiben.

Weiter wird das Trägergas-Dampfgemisch einem Konzentratabscheider zugeführt, in dem der Restflüssigkeitsanteil als Konzentrat abgeschieden und zu einer Entsorgung/Rückgewinnung über einen Konzentratsammelbehälter abgeleitet wird.

Anschließend wird das vom Restflüssigkeitsanteil befreite und damit gereinigte Trägergas-Dampfgemisch als Trägergas-Trockendampfgemisch komprimiert und abgekühlt, so daß die Basisflüssigkeit kondensiert und in einem nachgeordneten Kondensatabscheider abgeschieden und zu einer Entsorgung/Wiederverwertung über einen Kondensatsammelbehälter abgeleitet wird.

Das am Kondensatabscheider separierte Trägergas wird in einem Kreislauf der Abfallflüssigkeit wieder zugeführt, wobei zumindest ein Teil der Wärmezufuhr für die Vorerwärmung der Abfallflüssigkeit in einem Kondensat/Abfallflüssigkeits-Wärmetauscher durch das heiße aus dem Kondensatsammelbehälter kommende Kondensat erfolgt. Ferner erfolgt zumindest ein Teil der Wärmezufuhr für die Verdampfung zu dem nassen Trägergas-Dampfgemisch in wenigstens einem Verdampfer/Kondensations-Wärmetauscher durch das abströmende, komprimierte und gereinigte Trägergas-Trockendampfgemisch, welches in diesem Verdampfer/Kondensations-Wärmetauscher durch die Wärmeabgabe zumindest teilweise kondensieren kann. Schließlich erfolgt eine weitere Wärmezufuhr für die Vorerwärmung der Abfallflüssigkeit in einem Konzentrat/Abfallflüssigkeits-Wärmetauscher durch das heiße aus dem Konzentratsammelbehälter kommende Konzentrat.

Gemäß Anspruch 14 umfaßt eine Vorrichtung zur Aufbereitung einer Abfallflüssigkeit, die aus einer Basisflüssigkeit mit darin enthaltenen, im wesentlichen flüssigen Verunreinigungen besteht, eine Einmischvorrichtung, der über eine Trägergaszuführleitung ein Trägergas und über eine Abfallflüssigkeitzuführleitung, vorzugsweise eine Druckleitung, eine vorerwärmte Abfallflüssigkeit zuführbar ist und in der eine Verteilung, vorzugsweise ein Feinstverteilung, von vorerwärmter Abfallflüssigkeit in dem Trägergas zu einem Trägergas-Abfallflüssigkeit-Gemisch durchführbar ist.

Der Einmischvorrichtung ist wenigstens ein Verdampfer/Kondensations-Wärmetauscher zur Verdampfung des Trägergas-Abfallflüssigkeit-Gernisches zu einem nassen Trägergas-Dampfgemisch, in der die Basisflüssigkeit verdampft ist und die flüssigen Verunreinigungen als Restflüssigkeitsanteil verbleiben, nachgeschaltet.

Dem wenigstens einen Verdampfer/Kondensations-Wärmetauscher ist wiederum ein Konzentratabscheider nachgeschaltet, in dem eine Abscheidung der Restflüssigkeit als heißes Konzentrat und eines Trägergas-Trockendampfgemisches von dem nassen Trägergas-Dampfgernisch erfolgt.

Auf dem Konzentratabscheider folge wiederum ein Konzentrat/Abfallflüssigkeit-Wärmetauscher, dem das heiße Konzentrat vorzugsweise unter Zwischenschaltung eines Konzentratsammelbehälters zur Vorerwärmung der der Vorrichtung über einen Zulauf zugeführten Abfallflüssigkeit zuführbar ist.

Dem Konzentratabscheider ist ein Kondensatabscheider nachgeschaltet, dem das Trägergas-Trockendampfgemisch nach Durchlaufen des wenigstens einen Verdampfer/Kondensations-Wärmetauscher zuführbar ist. In dem Kondensatabscheider erfolgt eine Abscheidung der Basisflüssigkeit als Kondensat und des Trägergases, das der Einmischvorrichtung über einen Trägergaskreislauf wiederzuführbar ist.

Ferner umfaßt die Vorrichtung zur Aufbereitung einer Abfallflüssigkeit einen dem Kondensatabscheider nachgeschalteten Kondensat/Abfallflüssigkeit-Wärmetauscher, der wiederum dem Konzentrat/Abfallflüssigkeit-Wärmetauscher nachgeschaltet ist und dem das Kondensat, vorzugsweise unter Zwischenschaltung eines Kondensatsammelbehälters, zur weiteren Vorerwärmung der Abfallflüssigkeit vor deren Zuführung zur Eimmischvorrichtung zuführbar ist. Mit einer derartigen Verfahrensführung und Vorrichtung zur Durchführung des Verfahrens wird erreicht, daß der Energieaufwand insgesamt erheblich reduziert ist, da nahezu alle heißen Ströme zur Erwärmung kälterer Ströme verwendet werden. Wie praktische Versuche ferner gezeigt haben, kann insbesondere mit der zweistufigen Vorwärmung der Abfallflüssigkeit vor deren Zuführung zur Einmischvorrichtung überraschenderweise bereits eine solche Temperatur der Abfallflüssigkeit genau eingestellt werden, die nach der Zumischung von Trägergas eine Feinstverteilung der Abfallflüssigkeit im Trägergas durch eine nahezu spontane Verdampfung begünstigt. Damit wird der Wirkungsgrad des Verfahrens und der Anlage insgesamt erhöht.

Insgesamt wird somit mit einem derartigen Verfahren und einer derartigen Vorrichtung ein energieoptimaler Betrieb gewährleistet, ohne dass die im Konzentrat vorhandene Basisflüssigkeit verdampft werden und in den Trägergas-Trockendampfgemisch-Kreislauf eingespeist werden muss Dadurch wird vermieden, dass im Konzentrat anfallende Inhaltsstoffe verdampft werden und den Trägergas-Trockendampfgemisch-Kreislauf kontaminieren. Eine Nachreinigung des Kondensats, wie beim gattungsgemäßen Stand der Technik, ist somit nicht mehr notwendig.

Insbesondere ist erfindungsgemäß vorgesehen, daß das Trägergas zwischen einem Kondensatabscheider und einer Trägergas-Einmischvorrichtung in einem separaten Trägergaskreislauf geführt und einer Trägergaszuführleitung mittelbar und/oder unmittelbar zuführbar ist, um die Trägergasverluste zu minimieren. Vorzugsweise ist hierzu im Trägergaskreislauf ein Gastrockner zur Trocknung von Trägergas angeordnet. Beispielsweise ist ein derartiger Gastrockner hinter einen Kondensatsammelbehälter geschalten, um nasses Restträgergas aus dem Kondensatsammelbehälter zu trocknen und dem Trägergaskreislauf im erwünschten trockenen Zustand zuzuführen.

Ferner kann mit dem erfindungsgemäßen Trägergaskreislauf erreicht werden, daß das Trägergas je nach Erfordernis in Abhängigkeit von den Prozeßparametern entweder unmittelbar direkt zur Trägergaszuführleitung und zusätzlich oder alternativ auch im Trägergaskreislauf mit Gastrocknung und Gasrückgewinnung zur Trägergaszuführleitung geführt werden kann. Dies erhöht die Flexibilität bei der Verfahrensführung erheblich, so daß eine einfache Anpassung der Verfahrensführung an z.B. unterschiedliche zu reinigende Abfallflüssigkeiten möglich ist.

In einer bevorzugten konkreten Verfahrensführung und Ausführungsform ist dabei vom Kondensatabscheider ausgehend über einen Kondensatsammelbehälter wenigstens eine Gasleitung unter Zwischenschaltung eines Gastrockners in einem Kreislauf zur Trägergaszuführleitung zurückgeführt, wobei vorzugsweise auch ein Verdichter vorgesehen ist. Mit einem derartigen Trägergaskreislauf wird erreicht, daß die Verluste von Trägergas in der Vorrichtung so gering wie möglich gehalten werden, da beispielsweise auch das in dem Kondensat noch vorhandene Trägergas wiedergewonnen und im Kreislauf zur Trägergaszuführleitung geführt wird. Damit ist insgesamt ein äußerst wirtschaftlicher Betrieb der Anlage möglich.

Für den Fall, daß z. B. nach längerer Betriebszeit dennoch Verluste von Trägergas im System auftreten, kann ferner auf einfache Weise Trägergas über einen mit dem Trägergaskreislauf gekoppelten Trägergasspeicher nachgefüllt werden. Die Zuführung erfolgt dabei durch einfache Einkopplung in den ohnehin vorhandenen Trägerkreislauf, so daß die Anlage hierfür nicht gestoppt zu werden braucht, was unwirtschaftlich ist, sondern kontinuierlich weiterbetrieben werden kann.

Ferner kann in diesen Trägergaskreislauf auf einfache Weise auch ein Sauerstoffbehälter mit einem Sauerstoffverdampfer für eine Naßoxidation integriert werden, der bei Bedarf zugeschalten wird.

Weiter ist erfindungsgemäß vorgesehen, daß ein weiterer zweiter Kondensatabscheider als Notfall/Entlastungs-Kondensatabscheider vorgesehen ist, dem über die Umgehungsleitung bei ggf. gesperrten oder reduzierten Hauptleitungen Trägergas-Trockendampfgemisch und/oder Brüden zugeführt wird. Damit ist bei einer Überlastung des ersten Kondensatabscheiders einerseits die Betriebssicherheit und andererseits auch die Weiterführung des Prozesses mit den erwünschten Betriebsergebnissen gewährleistet. Ein derartiger Notfall/Entlastungs-Kondensatabscheider kann zudem auf einfache Weise in das System integriert werden, wobei insbesondere auch eine direkte Einspeisung von Trägergas in eine Trägergaszuführleitung zur Einmischvorrichtung bzw. in einen Trägergaskreislauf mit ggf. nachfolgender Trocknung in einem Gastrockner erfolgen kann. Damit wird die Flexibilität einer Anlage insgesamt so erhöht, daß schnell auf bestimmte Betriebszustände reagiert und ein optimaler Prozeß gefahren werden kann.

Bevorzugt ist ferner wenigstens ein Teilbereich der Zuführleitung vom Konzentratabscheider zum Kondensatabscheider als Trägergas-Trockendampfgemisch-Druckleitung mit vorgeschaltetem Verdichter zur Druckund Temperaturerhöhung des Trägergas-Trockendampfgemisches ausgebildet. Dabei ist in der Druckleitung zur Betriebsüberwachung wenigstens eine Meßvorrichtung, vorzugsweise wenigstens eine Durchflußmeßvorrichtung und/oder wenigstens eine Temperaturmeßvorrichtung und/oder wenigstens eine Druckmeßvorrichtung angeordnet, die Bestandteil eines Regelkreises sind.

Im Falle einer nicht ausreichenden Kompressionswärme, was insbesondere im Anfahrbetrieb der Fall sein kann, ist die Druckleitung vorzugsweise mit einem Wärmeerzeuger gegebenenfalls über einen Wärmetauscher gekoppelt, der automatisiert zu- und/oder abgeschälten werden kann. Im Falle des Einsatzes von zwei Verdampfer/Kondensations-Wärmetauschern sind diese entweder als Einzelaggregat oder als Gesamtaggregat schaltbar.

Jede der Systemkomponenten kann mittels einer Regelung entsprechend den eingestellten und gewünschten Vorgaben geregelt werden. Dazu ist prozeßleitungsseitig wenigstens ein Stellglied, vorzugsweise wenigstens ein Regelventil, und wenigstens eine Meßvorrichtung, vorzugsweise eine Temperaturmeßvorrichtung und/oder Druckmeßvorrichtung und/oder Durchflußmessung vorgesehen, die jeweils mit einem Regler gekoppelt sind. Damit ist eine optimale Prozeßführung in Abhängigkeit von den zu reinigenden Abfallflüssigkeiten und deren Komponenten möglich.

Für eine hohe Betriebssicherheit der Anlage ist ferner eine Abschlämmvorrichtung vorgesehen, mit der insbesondere der oder die Verdampfer/Kondensations-Wärmetauscher durch Kondensat, z. B. aus einem Entgasungsbehälter, abgeschlämmt werden können

Für eine umweltfreundliche Notentlastung kann ferner ein Abluftfilter vorgesehen sein, über den die Entlastung in den betriebsdruckfreien Raum erfolgt.

Anhand einer Zeichnung wird die Erfindung näher erläutert.

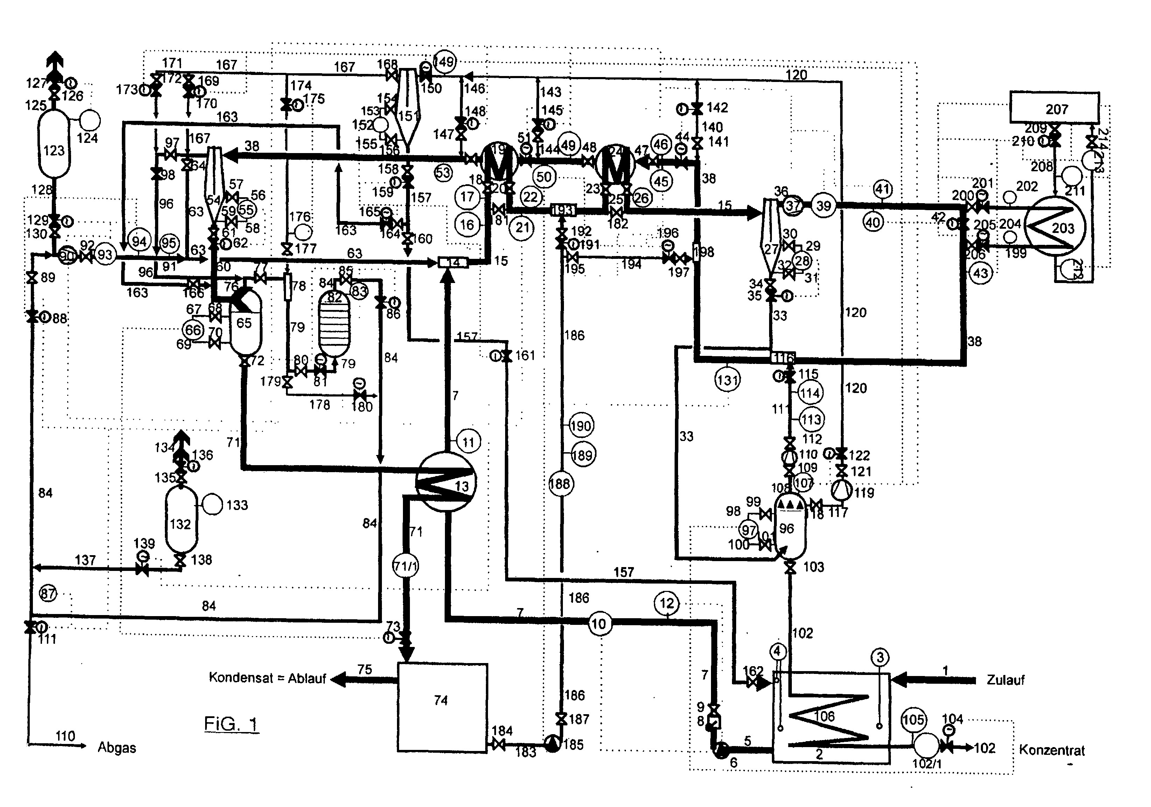

Die einzige Figur zeigt schematisch ein Fließbild einer Vorrichtung zur Aufbereitung einer Abfallflüssigkeit, die aus einer Basisflüssigkeit mit darin enthaltenen, im wesentlichen flüssigen Verunreinigungen besteht.

In der Produktion anfallende Abfällflüssigkeiten, wie z. B. Lösungsmittel in unterschiedlichen Verdünnungen, werden ggf. vorgereinigt über den Zulauf 1 in einen Pumpensumpf 2 eingeleitet. Im Pumpensumpf 2 ist ein Konzentrat/Abfallflüssigkeit-Wärmetauscher 106 angeordnet, durch den eine Vorerwärmung der Abfallflüssigkeit erfolgt. Diese Vorerwärmung wird mittels einer Temperaturmeßvorrichtung 3 gemessen.

Anschließend wird die so vorerwärmte Abfallflüssigkeit über eine Pumpe 6 zu einem dem Konzentrat/Abfallflüssigkeit-Wärmetauscher 106 nachgeschalteten Kondensat/Abfallflüssigkeit-Wärmetauscher 13 zugeführt, in dem die Temperatur der zu reinigenden Abfallflüssigkeit abhängig vom vorhandenen Druck möglichst nahe an eine gewünschte Verdampfungstemperatur erwärmt wird.

Zur Vermeidung vom Trockenlauf der Pumpe 6 ist im Pumpensumpf 2 eine Füllstandsmeßvorrichtung 4 vorgesehen. Mit dieser Füllstandsmeßvorrichtung 4 wird erreicht, daß der Konzentrat/Abfallflüssigkeit-Wärmetauscher 106 immer von Flüssigkeit überdeckt ist und die Pumpe 6 mit einem ausreichenden Vordruck beschickt werden kann. Dieser Vordruck ist variabel und von der Temperatur der zu fördernden Abfallflüssigkeit abhängig. Der Minimalschaltpunkt der Füllstandsmeßvorrichtung 4 wird mittels einer Verknüpfung mit der Temperaturmeßvorrichtung 3 kontinuierlich angepaßt.

Der Zulauf zur Pumpe 6 erfolgt über eine Zulauf/Saugleitung 5 aus dem Pumpensumpf 2, wobei die Abfallflüssigkeit über eine Druckleitung 7, in die eine Rückschlagklappe 8 und ein Absperrschieber 9 integriert sind, sowie über den Kondensat/Abfallflüssigkeit-Wärmetauscher 13 zu einer Einmischvorrichtung 14 gefördert wird.

In dieser Einmischvorrichtung 14 erfolgt eine intensive Vermischung der vorgewärmten Abfallflüssigkeit mit einem über eine Trägergasleitung 63 zugeführten Trägergasstrom. Die der Einmischvorrichtung 14 zugeführte Flüssigkeitsmenge wird mittels einer Durchflußmengenmeßvorrichtung 10 gemessen, die mit einer Temperaturmeßvorrichtung 11 im Auslauf des Kondensat/Abfallflüssigkeit-Wärmetauschers 13 verbunden ist. Über diese Meßeinrichtungen 10, 11 wird die Förderleistung der Pumpe 6 von Hand oder automatisch verändert. Die Veränderung des Förderdrucks wird mit einer Druckmeßvorrichtung 12 gemessen und zur Sicherung der Förderung umgesetzt.

In der Einmischvorrichtung 14 wird durch die zweistufige Vorerwärmung auf die optimale Temperatur vorerwärmte Abfallflüssigkeit in dem Trägergasstrom eine Feinstverteilung im Rahmen einer spontanen Verdampfung möglich. Dieses nunmehr vorliegende nasse Trägergas-Dampfgemisch gelangt über eine Gemischleitung 15 in einen Verdampfer/Kondensations-Wärmetauscher 19, in dem eine weitere Erwärmung mit dem Ziel einer Überhitzung des Trägergas-Dampfgemisches erfolgt. Gegebenenfalls kann hier mittels einem weiteren Verdampfer/Kondensations-Wärmetauscher 24 eine Nachheizung erfolgen. Dieser Verdampfer/Kondensations-Wärmetauscher 24 wird durch das Öffnen oder Schließen der Ventile 182, 23 und 25 zu- oder abgeschaltet. Die erforderlichen Temperaturen und Betriebsdrücke des Trägergas-Dampfgemisches sind dabei von den abzuscheidenden Inhaltsstoffen und den thermischen Größen der zu reinigenden Abfallflüssigkeit abhängig. Daher können Temperaturen zwischen 50°C und 250°C sowie Betriebsdrücke zwischen 0,5 bar und 20 bar erforderlich werden. Diese Temperaturen und Betriebsdrücke werden im Bereich der beiden Verdampfer/Kondensations-Wärmetauscher 19, 24 in der Gemischleitung 15 mittels einer Temperaturmeßvorrichtung 17, 22 und einer Betriebsdruckmeßvorrichtung 16, 21, 26 gemessen und dienen als Regel- und Steuergrößen.

Das Trägergas-Dampfgemisch mit dem flüssigen Rest der zu reinigenden Abfallflüssigkeit wird anschließend in einen Konzentratabscheider 27 eingeleitet, indem dieser flüssige Rest als Konzentrat abgeschieden wird. Dabei kann dieser Konzentratabscheider 27 beispielsweise als Zyklon oder Prallplattenabscheider ausgebildet sein. Im Falle des Prallplattenabscheiders sind sowohl Einplatten- als auch Mehrplattenabscheider einsetzbar.

Das nunmehr keine Restflüssigkeit mehr enthaltende Trägergas-Dampfgemisch verläßt über eine Leitung 36 den Konzentratabscheider 27 und wird mittels eines Verdichters 37 unter gleichzeitiger Temperaturerhöhung auf den für ein Trägergas-Trockendampfgemisch optimierten Betriebsdruck eingestellt. Dieses Trägergas-Trockendampfgemisch gelangt über eine Druckleitung 38 zu den Verdampfer/Kondensations-Wärmetauscher 19, 24 und wird dort unter teilweiser Kondensation des Trockendampfes des Trägergas-Trockendampfgemisches, nämlich der Basisflüssigkeit der Abfallflüssigkeit, abgekühlt, wobei gleichzeitig eine Erhitzung des nassen Trägergas-Dampfgemisches, das von der Einmischvorrichtung 14 zu dem Konzentratabscheider 27 strömt, erfolgt.

Das Kondensat wird anschließend in einem Kondensatabscheider 54 abgeschieden. Als Kondensatabscheider 54 kommen hier ebenfalls z. B. ein Zyklon oder ein Prallplattenabscheider, z. B. ein Einplatten- oder Mehrplattenabscheider, zum Einsatz.

Wie dies dem Fließbild der einzigen Figur weiter zu entnehmen ist, sind in der Druckleitung 38 eine Durchflußmengenmeßvorrichtung 39, Temperaturmeßvorrichtung 40, 43, 45, 50 und Betriebsdruckmeßvorrichtung 41, 46, 49, 53 zur Betriebsüberwachung angeordnet. Diese Meßvorrichtungen sind entsprechend miteinander verknüpft und dienen als Regel- und Steuergrößen sowie zur Ermittlung von Massengrößen.

Das im Kondensatabscheider 54 vom Kondensat befreite Trägergas kann in einer ersten Verfahrensführung über die Trägergasleitung 63 zu der Einmischvorrichtung 14 direkt zurückgeführt werden. Als Trägergas kommen beispielsweise alle in den jeweiligen Flüssigkeiten nicht oder nur schwer löslichen Gase zur Anwendung.

Das im Kondensatabscheider 54 anfallende Kondensat wird über eine Kondensatablaufleitung 60 in einen Kondensatsammelbehälter 65 abgeleitet, wobei über eine Füllstandsmessung 55 bis 59 in Verbindung mit einem Regelventil 62 ein möglichst trägergasverlustfreier Ablauf erzielt wird. Ein Absperrventil 61 dient dabei als Sicherungsvorrichtung bei notwendigen Wartungsarbeiten. Aus dem Kondensatsammelbehälter 65 wird das Kondensat über den Kondensat/Abfallflüssigkeit-Wärmetauscher 13 unter Abbau des vorhandenen Betriebsdruckes mittels einer Ablaufleitung 71 in einen Entgasungsbehälter 74 geleitet. Beim Durchlauf des Kondensats durch den Kondensat/Abfallflüssigkeit-Wärmetauscher 13 findet in der zuvor beschriebenen Art und Weise eine Wärmeübertragung auf die der Eimmischvorrichtung 14 über die Druckleitung 7 zugeführte Abfallflüssigkeit zu deren Vorerwärmung statt.

Der Entgasungsbehälter 74 dient dazu, die im Kondensat unter vorherrschenden Betriebsdruckbedingungen gelösten gasförmigen Stoffe nach der Entspannung zu entfernen. Anschließend kann dann das Kondensat über den Kondensatablauf 75 abfließen.

Mittels der Ventile 181 und 182 in der Gemischleitung 15 kann entsprechend auf die Verdampfer/Kondensations-Wärmetauscher 19, 24 als Einzelaggregat oder als Gesamtaggregat umgeschaltet werden. Dazu ist es erforderlich, daß das Trägergas-Trockendampfgemisch der Druckleitung 38 entsprechend der erforderlichen Schaltung über Umgehungsleitungen 140, 143 oder 146 und der Umgehungsleitung 120 geleitet wird. Zur Einstellung dienen hier die Regelventile 44 und 51 in der Druckleitung 38 und die Regelventile 142, 145 und 148 sowie 122 in den Umgehungsleitungen 140 143, 146 und 120.

Über die Umgehungsleitung 120 kann zur Entlastung des Kondensatabscheiders 54 ein zusätzlicher, zweiter Kondensatabscheider als Notfall/Entlastungs-Kondensatabscheider 151 zugeschaltet werden. Das in dem Notfall/Entlastungs-Kondensatabscheider 151 anfallende Kondensat wird über Kondensatleitungen 157, 163 in die Kondensatablaufleitung 60 des ersten Kondensatabscheiders 54 geleitet und anschließend dem Kondensatsammelbehälter 65 zugeführt. Der Ablaß des hier anfallenden Kondensates wird mittels einer Füllstandsmessung 152, 153, 154, 155, 156 über die Regelventile 159, 165 und 161 gesteuert.

Das am Notfall/Entlastungs-Kondensatabscheider 151 abgeschiedene kondensatfreie Trägergas kann über eine Leitung 167 entweder direkt in die Trägergaszuführleitung 63 eingespeist werden oder entsprechend der jeweils gegebenen Prozeßbedingungen mittels des Leitungsverbundes 167, 171, 96 in eine an den Kondensatsammelbehälter 65 mit einem Absperrschieber 77 angeschlossene Abgasleitung 76, 79 zugeführt werden und anschließend über einen Gastrockner 82 zur Trägergastrocknung und die Gasleitung 84 in einem weiteren Trägergaskreislauf ebenfalls wiederum der Trägergaszuführleitung 63 zugeführt werden. In diesem Trägergaskreislauf ist ferner ein Verdichter 90 vorgesehen.

Zur Aufrechterhaltung der notwendigen Betriebssicherheit ist am Gastrockner 82 eine Druckmeßvorrichtung 83 angebracht, mittels der über Regelventile 81, 86 und 181 der Gastrockner 82 abgeschaltet werden kann und die Trägergasführung zum Verdichtung 90 direkt über die Gasleitung 84 erfolgt. Dabei kann mittels der Gasleitung 96 ein Trägergasanteil zwischen 0 und 100% im Gastrockner 82 behandelt werden.

Wie dies dem Fließbild der einzigen Figur weiter zu entnehmen ist, kann in den Trägergaskreislauf ferner ein Trägergasspeicherbehälter 123 eingeschalten werden, um einen Verlust von Trägergas während des Betriebs der Anlage auszugleichen. Dieser Trägergasausgleich erfolgt ggf. unter Nutzung eines hier nicht dargestellten Verdampfers über eine Gasleitung 128, in der ein Regelventil 129 angeordnet ist, wobei das Ausgleichsträgergas in die Gasleitung 84 vor einem Ansaugstutzen des Trägergasverdichters 90 zugeführt wird. Der Trägergasspeicherbehälter 123 selbst ist durch eine Ablaßvorrichtung gesichert, die eine Druckmeßvorrichtung 124, ein Ablaßrohr 125 und ein Ablaßventil 127 aufweist.

Ferner ist für eine Notentlastung ein hier nicht dargestellter Abluftfilter vorgesehen, wobei die Entlastung ausgehend von der Druckleitung 38 über einen ersten Leitungsverbund 120, 140, 143, 146 und den Notfall/Entlastungs-Kondensatabscheider 151 sowie einen zweiten Leitungsverbund 167, 174, 79, 178, 84, 110 sowie den Abluftfilter selbst in den betriebsdruckfreien Raum erfolgt. Das im Notfall/Entlastungs-Kondensatabscheider 151 in diesem Fall anfallende Kondensat wird über die Leitung 157 bei geöffneten Regelventilen 159, 161 in den Pumpensumpf 2 zurückgeführt.

Um im Falle einer Naßoxidation die erforderlichen Sauerstoffmengen zur Verfügung zu stellen, ist ferner ein Sauerstoffbehälter mit Sauerstoffverdampfer 132 vorgesehen, der über eine Sauerstoffleitung 137 mit einem Regelventil 139 an die Gasleitung 84 des Trägergaskreislaufes und damit an den Trägergasverdichter 90 angeschlossen werden kann. Die Sauerstoffzufuhr wird dabei über eine in der Druckleitung 38 des Trägergas-Trockendampfgemisch-Kreislaufs angeordnete Sauerstoffmeßvorrichtung gesteuert. Zur Drucksicherung am Sauerstoffbehälter mit Sauerstoffverdampfer 132 ist eine Druckentlastungsleitung 134 mit einem Entlastungsventil 136 vorgesehen, das von einer Druckmeßvorrichtung 133 geschalten wird.

Das im Konzentratabscheider 27 anfallende Konzentrat wird über eine Konzentratablaufleitung 33 einem Konzentratsammelbehälter 96 zugeführt. Dabei wird über eine Füllstandsmessung 28 bis 32 in Verbindung mit einem Regelventil 35 eine trägergasfreie Ableitung des Konzentrats sichergestellt. Die Einleitung des Konzentrats in den Konzentratsammelbehälter 96 erfolgt unterhalb des minimalen Konzentragspiegels, so daß ein Brüdenniederschlag erfolgen kann.

Im Falle einer Brüdenbildung können die Brüden mittels eines Brüdenverdichters 119 über die Leitungen 117 und 120 in den Notfall/Entlastungs-Kondensatabscheider 151 niedergeschlagen werden und dann über die Kondensatleitung 157 in den Pumpensumpf 2 zurückgeführt werden.

Die Steuerung des Brüdenverdichters 119 und der entsprechenden Regelventile 122, 150, 159, 161 erfolgt über eine Druckmeßvorrichtung 107 am Konzentratsammelbehälter 96.

Für Brüden, die evtl. genutzt werden können, besteht durch Zuschalten eines zusätzlichen Brüdenverdichters 110, der über eine Brüdenleitung 108 an den Konzentratsammelbehälter 96 angeschlossen ist, die Möglichkeit die anfallenden Brüden über eine Brüdendruckleitung 111 mit einem darin angeordneten Stellventil 115 über eine Brüdeneinmischvorrichtung 116 in die Druckleitung 38 zu fördern. Zur Überwachung sind hierbei die Druckmeßvorrichtung 113 und die Temperaturmeßvorrichtung 114 vorgesehen.

Das im Konzentratsammelbehälter 96 enthaltene Konzentrat wird über eine Auslaßleitung 102 über den Konzentrat/Abfallflüssigkeit-Wärmetauscher 106, in dem eine Wärmeabgabe vom heißen Konzentrat zur Vorerwärmung des am Zulauf 1 zugeführten Abfallflüssigkeit, einer weiteren Verwertung zugeführt. Zur Vermeidung eines stoßweisen Ablaufs ist in der Auslaßleitung 102 ein Regelventil 104 angeordnet, das über eine Füllstandsmeßvorrichtung 97 bis 101 gesteuert wird. Zur Überwachung der Wirkung des Konzentrat/Abfallflüssigkeit-Wärmetauschers 106 ist ferner im Ablauf eine Temperaturmeßvorrichtung 105 angeordnet.

Bei nicht ausreichender Kompressionswärme, was insbesondere im Anfahrbetrieb der Fall sein kann, wird über die Zuschaltung einer externen Wärmequelle, die aus einem Wärmeerzeuger 207 besteht, der mittels einer Umwälzleitung 208 mit einem Wärmetauscher 203 verbunden ist, die erforderliche Reaktionstemperatur eingestellt werden. Dazu wird das Trägergas-Dampfgemisch über eine Umleitung 199 in den Wärmetauscher 203 geleitet. Die Steuerung des Wärmetauschers 203 erfolgt über eine Durchflußmengenmeßvorrichtung 213 mit dem Regelventil 210 bei einer Überwachung durch eine Temperaturmeßvorrichtung 211 und eine Druckmeßvorrichtung 212.

Eine automatisierte Zuschaltung dieser externen Wärmequelle kann über eine Temperaturmeßvorrichtung 40 in Verbindung mit Regelventilen 42, 201 und 205 erfolgen. Dagegen erfolgt das Abschalten dieser externen Wärmequelle vorzugsweise stets über eine Temperaturmeßvorrichtung 43 mit einem umgekehrten Schaltvorgang der eben erwähnten Regelventile 42, 201 und 205. Die Überwachung des Betriebsdrucks erfolgt mittels der Druckmeßvorrichtungen 202 und 204.

Insbesondere zur Abschlämmung des Verdampfer/Kondensations-Wärmetauschers 24 ist eine Abschlämmvorrichtung vorgesehen, die eine Kondensatpumpe 185 umfaßt, die über eine Saugleitung 183 mit dem Entgasungsbehälter 74 verbunden ist. Zur Abschlämmung kann in diesem Fall über eine Kondensatdruckleitung 186 das Kondensat zur Abschlämmung in eine Einmischvorrichtung 193 in der Trägergas-Dampfleitung 15 eingespeist werden. Durch Umschaltung mittels Regelventilen 191, 197 ist die Einspeisung in die Druckleitung 38 über eine Einmischvorrichtung 198 möglich.

Zur Betriebsüberwachung sind bei der Abschlämmung in der Kondensatdruckleitung 186 sowohl eine Druckmeßvorrichtung 189, eine Temperaturmeßvorrichtung 190 und eine Durchflußmengenmeßvorrichtung 188 angeordnet.

## Patentansprüche

1. Verfahren zur Aufbereitung einer Abfallflüssigkeit, die aus einer Basisflüssigkeit mit darin enthaltenen, im wesentlichen flüssigen Verunreinigungen besteht, durch Trennung der Verunreinigungen von der dadurch für eine umweltfreundliche Entsorgung oder Wiederverwertung gereinigten Basisflüssigkeit, wobei die Trennung durchgeführt wird, indem
der vorerwärmten Abfallflüssigkeit ein Trägergas zugeführt wird und dieses Gemisch durch Wärmezufuhr zu einem nassen Trägergas-Dampfgemisch verdampft wird dergestalt, daß die Basisflüssigkeit verdampft ist und die flüssigen Verunreinigungen als Restflüssigkeitsanteil verbleiben,
dieses Trägergas-Dampfgemisch einem Konzentratabscheider (27) zugeführt wird, in dem der Restflüssigkeitsanteil als Konzentrat abgeschieden und zu einer Entsorgung/Rückgewinnung über einen Konzentratsammelbehälter (96) abgeleitet wird,
das vom Restflüssigkeitsanteil befreite und damit gereinigte Trägergas-Dampfgemisch als Trägergas-Trockendampfgemisch komprimiert und dann abgekühlt wird, so daß die Basisflüssigkeit kondensiert und in einem nachgeordneten Kondensatabscheider (54) abgeschieden und zu einer Entsorgung/Wiederverwertung über einen Kondensatsammelbehälter (65) abgeleitet wird,
das am Kondensatabscheider (54) separierte Trägergas in einem Kreislauf der Abfallflüssigkeit zugeführt wird, wobei
zumindest ein Teil der Wärmezufuhr für die Vorerwärmung der Abfallflüssigkeit in einem Kondensat/Abfallflüssigkeits-Wärmetauscher (13) durch das heiße aus dem Kondensatsammelbehälter (65) kommende Kondensat erfolgt,
zumindest ein Teil der Wärmezufuhr für die Verdampfung zu dem nassen Trägergas-Dampfgemisch in wenigstens einem Verdampfer/Kondensations-Wärmetauscher (19, 24) durch das abströmende komprimierte gereinigte Trägergas-Trockendampfgemisch erfolgt, welches in diesem Verdampfer/Kondensations-Wärmetauscher (19, 24) durch die Wärmeabgabe zumindest teilweise kondensieren kann, und
eine weitere Wärmezufuhr für die Vorerwärmung der Abfallflüssigkeit in einem Konzentrat/Abfallflüssigkeits-Wärmetauscher (106) durch das heiße aus dem Konzentratsammelbehälter (96) kommende Konzentrat erfolgt.

2. Verfahren nach Anspruch 1, **dadurch gekennzeichnet, daß** der Konzentrat/Abfallflüssigkeits-Wärmetauscher (106) dem Kondensat/Abfallflüssigkeits-Wärmetauscher (13) vorgeschaltet ist.

3. Verfahren nach Anspruch 1 oder Anspruch 2, **dadurch gekennzeichnet, daß** die Abfallflüssigkeit im Kondensat/Abfallflüssigkeits-Wärmetauscher (13) bis möglichst nahe an die Verdampfungstemperatur der Basisflüssigkeit erwärmt wird.

4. Verfahren nach einem der Ansprüche 1 bis 3, **dadurch gekennzeichnet, daß** die Abfallflüssigkeit in einer Einmischvorrichtung (14) feinstverteilt in den Trägergasstrom eingeleitet wird.

5. Verfahren nach einem der Ansprüche 1 bis 4, **dadurch gekennzeichnet, daß** zwei Verdampfer/Kondensations-Wärmetauscher (19, 24) verwendet sind, die durch entsprechende Verbindungsleitungen und Absperrorgane (181, 182) als Einzelaggregat oder Gesamtaggregat umschaltbar sind.

6. Verfahren nach einem der Ansprüche 1 bis 5, **dadurch gekennzeichnet, daß** in der Trägergas-Trockendampfgemisch-Druckleitung (38) ein Wärmeerzeuger (207) zuschaltbar ist.

7. Verfahren nach einem der Ansprüche 1 bis 6, **dadurch gekennzeichnet, daß** im Konzentratsammelbehälter (96) anfallende Brüden komprimiert über eine Brüdeneinmischvorrichtung (116) der Trägergas-Trockendampfgemisch-Druckleitung (38) und/oder einer Umgehungsleitung (120) zugeführt werden.

8. Verfahren nach einem der Ansprüche 1 bis 7, **dadurch gekennzeichnet, daß** ein zweiter Kondensatabscheider als Notfall/Entlastungs-Kondensatabscheider (151) vorgesehen ist, dem über die Umgehungsleitung (120) ein Trägergas-Trockendampfgernisch und/oder Brüden zugeführt werden, wobei das gereinigte Trägergas aus dem Gasausgang des Notfall/Entlastungs-Kondensatabscheiders (151) dem Trägergaskreislauf zugeführt wird und das Kondensat aus dem Flüssigkeitsausgang direkt oder indirekt dem Flüssigkeits-Ausgangssystem des ersten Kondensatabscheiders (54) oder im Fall einer Druck-Notentlastung einem Pumpensümpf (2) am Zulauf (1) zugeführt wird.

9. Verfahren nach einem der Ansprüche 1 bis 8, **dadurch gekennzeichnet, daß** in einem Gastrockner (82) Trägergas getrocknet werden kann und dann dem Trägergaskreislauf zugeführt wird.

10. Verfahren nach einem der Ansprüche 1 bis 9, **dadurch gekennzeichnet, daß** bei einem Verlust von Trägergas im Trägergaskreislauf aus einem angeschlossenen Trägergasspeicher (123) Trägergas nachgefüllt wird.

11. Verfahren nach einem der Ansprüche 1 bis 10, **dadurch gekennzeichnet, daß** vor dem Kondensat-Ablauf (75) ein Entgasungsbehälter (74) angeordnet ist, mit dem noch gelöste gasförmige Stoffe nach der Entspannung entfernt werden.

12. Verfahren nach Anspruch 11, **dadurch gekennzeichnet, daß** zur Abschlämmung des oder der Verdampfer/Kondensations-Wärmetauscher (19, 24) Kondensat über zugeordnete Einmischvorrichtungen (193, 198) in die abzuschlämmenden Systembereiche pumpbar ist.

13. Verfahren nach einem der Ansprüche 1 bis 12, **dadurch gekennzeichnet, daß** im Anwendungsfall einer Naßoxidation aus einem Sauerstoffbehälter mit Sauerstoffverdampfer (132) gesteuert durch eine Sauerstoffmeßvorrichtung der erforderliche Sauerstoff dem Trägergas zugeführt wird.

14. Vorrichtung zur Aufbereitung einer Abfallflüssigkeit, die aus einer Basisflüssgkeit mit darin enthaltenen, im wesentlichen flüssigen Verunreinigungen besteht,
mit einer Einmischvorrichtung (14), der über eine Trägergaszuführleitung (63) ein Trägergas und über eine Abfallflüssigkeitzuführleitung (7) eine vorerwärmte Abfallflüssigkeit zuführbar ist und in der eine Verteilung von vorerwärmter Abfallflüssigkeit in dem Trägergas zu einem Trägergas-Abfallflüssigkeit-Gemisch durchführbar ist,
mit wenigstens einem der Einmischvorrichtung (14) nachgeschalteten Verdampfer/Kondensations-Wärmetauscher (19, 24) zur Verdampfung des Trägergas-Abfallflüssigkeit-Gemisches zu einem nassen Trägergas-Dampfgemisch, in der die Basisflüssigkeit verdampft ist und die flüssigen Verunreinigungen als Restflüssigkeitsanteil verbleiben,
mit einem dem wenigstens einen Verdampfer/Kondensations-Wärmetauscher (19, 24) nachgeschalteten Konzentratabscheider (27) zur Abscheidung der Restflüssigkeit als heißes Konzentrat und eines Trägergas-Trockendampfgemisches von dem nassen Trägergas-Dampfgemisch,
mit einem dem Konzentratabscheider (27) nachgeschalteten Konzentrat/Abfallflüssigkeit-Wärmetauscher (106), dem das heiße Konzentrat zur Vorerwärmung der der Vorrichtung über einen Zulauf (1) zugeführten Abfallflüssigkeit zuführbar ist,
mit einem dem Konzentratabscheider (27) nachgeschalteten Kondensatabscheider (54), dem das Trägergas-Trockendampfgernisch nach Durchlaufen des wenigstens einen Verdampfer/Kondensations-Wärmetauschers (19, 24) und dortiger teilweiser Kondensation zur Abscheidung der Basisflüssigkeit als Kondensat und zur Abscheidung des der Einmischvorrichtung (14) über einen Trägergaskreislauf wiederzuführbaren Trägergases zuführbar ist, und
mit einem dem Kondensatabscheider (54) nachgeschalteten Kondensat/Abfallflüssigkeit-Wärmetauscher (13), der wiederum dem Konzentrat/Abfallflüssigkeit-Wärmetauscher (106) nachgeschaltet ist und dem das Kondensat zur weiteren Vorerwärmung der Abfallflüssigkeit vor deren Zuführung zur Einmischvorrichtung (14) zuführbar ist,

15. Vorrichtung nach Anspruch 14, **dadurch gekennzeichnet, daß** wenigstens ein Teilbereich der Zuführleitung vom Konzentratabscheider (27) zum Kondensatabscheider (54) als Trägergas-Trockendampfgemisch-Druckleitung (38) mit vorgeschaltetem Verdichter (37) zur Druck- und Temperaturerhöhung des Trägergas-Trockendampfgemisches ausgebildet ist.

16. Vorrichtung nach Anspruch 15, **dadurch gekennzeichnet, daß** in der Druckleitung (38) zur Betriebsüberwachung wenigstens eine Meßvorrichtung angeordnet ist, die Bestandteil eines Regelkreises ist.

17. Vorrichtung nach Anspruch 15 oder Anspruch 16, **dadurch gekennzeichnet, daß** die Druckleitung (38) im Falle einer nicht ausreichenden Kompressionswärme mit einem Wärmeerzeuger (207) koppelbar ist.

18. Vorrichtung nach Anspruch 17, **dadurch gekennzeichnet, daß** für eine automatisierte Zuschaltung und/oder Abschaltung des Wärmeerzeugers (207) prozeßleitungsseitig wenigstens ein Stellglied und wenigstens eine Meßvorrichtung vorgesehen sind, die jeweils mit einem Regler gekoppelt sind.

19. Vorrichtung nach einem der Ansprüche 14 bis 18, **dadurch gekennzeichnet, daß** das Trägergas zwischen dem Kondensatabscheider (54) und der Trägergas-Einmischvorrichtung (14) in einem separaten Trägergaskreislauf geführt und einer Trägergaszuführleitung (63) mittelbar und/oder unmittelbar zuführbar ist.

20. Vorrichtung nach Anspruch 19, **dadurch gekennzeichnet, daß** im Trägergaskreislauf ein Gastrockner (82) zur Trocknung von Trägergas angeordnet ist.

21. Vorrichtung nach Anspruch 20, **dadurch gekennzeichnet, daß** vom Kondensatabscheider (54) ausgehend über einen Kondensatsammelbehälter (65) wenigstens eine Gasleitung (96, 79, 84) unter Zwischenschaltung eines Gastrockners (82) in einem Kreislauf zur Trägergaszuführleitung (63) zurückgeführt ist.

22. Vorrichtung nach einem der Ansprüche 19 bis 21, **dadurch gekennzeichnet, daß** die Trägergaszuführleitung (63) vom Kondensatabscheider (54) ausgehend direkt zur Einmischvorrichtung (14) geführt ist.

23. Vorrichtung nach einem der Ansprüche 19 bis 22, **dadurch gekennzeichnet, daß** in den Trägergaskreislauf ein Trägergasspeicher (123) zum Ausgleich von Trägergasverlusten zuschaltbar ist.

24. Vorrichtung nach einem der Ansprüche 19 bis 23, **dadurch gekennzeichnet, daß** für eine Naßoxidation in den Trägergaskreislauf ein Sauerstoffbehälter mit Sauerstoffverdampfer (132) schaltbar ist.

25. Vorrichtung nach einem der Ansprüche 14 bis 24, **dadurch gekennzeichnet, daß** am Kondensatablauf (75) ein Entgasungsbehälter (74) vorgesehen ist.

26. Vorrichtung nach einem der Ansprüche 14 bis 25, **dadurch gekennzeichnet, daß** am Kondensatsammelbehälter (65) gasausgangsseitig eine Sammelbehälter-Abgasleitung (76) mit einem Absperrschieber (77) vorgesehen ist.

27. Vorrichtung nach einem der Ansprüche 14 bis 26, **dadurch gekennzeichnet,**
**daß** ein zweiter Kondensatabscheider als Notfall/Entlastungs-Kondensatabscheider (151) vorgesehen ist, dem eingangsseitig über eine Umgehungsleitung (120) Brüden vom Konzentratsammelbehälter und/oder Trägergas-Trockendampfgemisch über in die Umgehungsleitung (120) mündende Umgehungsleitungen (140, 143, 146) einer Druckleitung (38) zwischen dem Konzentratabscheider (27) und dem ersten Kondensatabscheider (54) zuführbar ist,
**daß** der Notfall/Entlastungs-Kondensatabscheider (151) gasausgangsseitig eine Abgasleitung (167) zu einer Trägergaszuführleitung (63) zur Einmischvorrichtung (14) und/oder wenigstens eine Leitung (167, 171, 96) zu einer vom Kondensatsammelbehälter (65) abgezweigten Gasleitung (76) eines separaten Trägergaskreislaufs aufweist, und
**daß** der Notfall/Entlastungs-Kondensatabscheider ferner kondensatausgangsseitig wenigstens eine Kondensatleitung (157, 163) zum Kondensatsammelbehälter (65) aufweist.

28. Vorrichtung nach Anspruch 27, **dadurch gekennzeichnet,**
**daß** für eine Notentlastung ein Abluftfilter vorgesehen ist, wobei die Entlastung ausgehend von der Druckleitung (38) über einen ersten Leitungsverbund (120, 140, 143, 146), den Notfall/Entlastungs-Kondensatabscheider (151), einen zweiten Leitungsverbund (167, 174, 79, 178, 84, 110) sowie den Abluftfilter in den betriebsdruckfreien Raum erfolgt, und
**daß** das im Notfall/Entlastungs-Kondensatabscheider (151) anfallende Kondensat über eine Leitung (157) einem Pumpensumpf (2) am Zulauf (1) zuführbar ist.

29. Vorrichtung nach Anspruch 27 oder Anspruch 28, **dadurch gekennzeichnet, daß** von der Abgasleitung (167) eine Umgehungsleitung zu einer Einmischvorrichtung [78] in den Trägergaskreislauf abgezweigt ist.

30. Vorrichtung nach einem der Ansprüche 14 bis 29, **dadurch gekennzeichnet, daß** dem Konzentratsammelbehälter (96) für den Fall einer Brüdenbildung ein Brüdenverdichter (119) nachgeschaltet ist.

31. Vorrichtung nach Anspruch 30, **dadurch gekennzeichnet, daß** wenigstens eine Meßvorrichtung eines Regelkreises zur Steuerung des Brüdenverdichters (119) und der entsprechenden Stellglieder (122, 150, 159, 161) am Konzentratsammelbehälter (96) angeordnet sind.

32. Vorrichtung nach Anspruch 30 oder 31, **dadurch gekennzeichnet, daß** an den Brüdenverdichter (110) eine Brüdendruckleitung (111) angeschlossen ist, die über eine Brüdeneinmischvorrichtung (116) in den Trägergas-Trockendampfgemisch-Kreislauf einkoppelbar ist.

33. Vorrichtung nach einem der Ansprüche 14 bis 32, **dadurch gekennzeichnet,**
**daß** der Konzentratsammelbehälter (96) über eine Auslaßleitung (102) mit dem Konzentrat/Abfallflüssigkeit-Wärmetauscher (106) verbunden ist, und
**daß** in der Auslaßleitung (102) zur Vermeidung eines stoßweisen Ablaufs wenigstens ein über wenigstens eine Meßvorrichtung regelbares Stellglied angeordnet ist.

34. Vorrichtung nach einem der Ansprüche 14 bis 33, **dadurch gekennzeichnet, daß** zur Abschlämmung wenigstens des oder der Verdampfer/Kondensations-Wärmetauscher (19, 24) eine Abschlämmvorrichtung vorgesehen ist, die über eine Einmischvorrichtung [193] in eine entsprechende Prozeßleitung [15] einkoppelbar ist.

## Revendications

1. Procédé pour le traitement d'un effluent liquide, qui est constitué d'un liquide de base, lequel contient des impuretés essentiellement liquides, par séparation des impuretés et du liquide de base, qui de ce fait est purifié pour permettre une élimination sans pollution de l'environnement ou un recyclage, procédé dans lequel on met en oeuvre la séparation en procédant comme suit :
un gaz porteur est envoyé à l'effluent liquide préchauffé, et ce mélange est, par un apport de chaleur, vaporisé pour donner un mélange gaz porteur humide-vapeur, de telle sorte que le liquide de base soit évaporé, et que les impuretés liquides restent en place sous forme d'un liquide résiduel,
on envoie ce mélange gaz porteur-vapeur à un séparateur de concentrats (27), dans lequel le liquide résiduel est séparé sous forme d'un concentrat, et, par l'intermédiaire d'un réservoir collecteur de concentrats (96), est évacué vers une unité d'élimination/récupération,
on comprime le mélange gaz porteur-vapeur, débarrassé du liquide résiduel et donc purifié, se présentant sous forme d'un mélange gaz porteur-vapeur sèche, puis on le refroidit de façon à condenser le liquide de base, qui va être séparé dans un séparateur de condensat (54) disposé en aval, et qui, par l'intermédiaire d'un réservoir collecteur de condensats (65), est évacué vers une unité d'élimination/recyclage,
dans un circuit fermé, on envoie à l'effluent liquide le gaz porteur séparé au niveau du séparateur de condensats (54), ce à l'occasion de quoi
au moins une partie de l'apport de chaleur, destiné au préchauffage de l'effluent liquide, s'effectue par l'intermédiaire du condensat provenant du réservoir collecteur de condensats (65), dans un échangeur de chaleur (13) condensat/effluent liquide,
au moins une partie de l'apport de chaleur nécessaire à l'évaporation, allant vers le mélange gaz porteur humide-vapeur, est réalisé dans au moins un échangeur de chaleur (19, 24) d'évaporateur/condensation, par l'intermédiaire du mélange gaz porteur-vapeur sèche purifié, comprimé et servant de décharge, ce mélange pouvant être en partie condensé par la chaleur émise dans cet échangeur de chaleur (19, 24) évaporateur/condensation, et
un autre apport de chaleur, destiné au préchauffage de l'effluent liquide, s'effectue dans un échangeur de chaleur (106) de concentrat/effluent liquide, par l'intermédiaire du concentré chaud sortant du réservoir collecteur de concentrat (96).

2. Procédé selon la revendication 1, **caractérisé en ce que** l'échangeur de chaleur (106) de concentrat-effluent liquide est installé en amont de l'échangeur de chaleur (13) de condensat/effluent liquide.

3. Procédé selon la revendication 1 ou 2, **caractérisé en ce que** l'effluent liquide est, dans l'échangeur de chaleur (13) de condensat/effluent liquide, chauffé aussi près que possible de la température d'évaporation du liquide de base.

4. Procédé selon l'une des revendications 1 à 3, **caractérisé en ce que** l'effluent liquide est, dans un équipement mélangeur (14), injecté en étant divisé de la manière aussi fine que possible dans le courant de gaz porteur.

5. Procédé selon l'une des revendications 1 à 4, **caractérisé en ce qu'**on utilise deux échangeurs de chaleur (19, 24) d'évaporateur/condensation, qui, grâce à des conduites de liaison et des organes d'obturation (181, 182) appropriés, peuvent être utilisés sous forme d'un groupe unique ou d'un groupe global.

6. Procédé selon l'une des revendications 1 à 5, **caractérisé en ce qu'**une unité de production de chaleur (207) peut être insérée dans la conduite sous pression (38) du mélange gaz porteur-vapeur sèche.

7. Procédé selon l'une des revendications 1 à 6, **caractérisé en ce que** les vapeurs se formant dans le réservoir collecteur de concentrais (96) sont, par l'intermédiaire d'un équipement mélangeur de vapeurs (116) envoyées à la conduite sous pression (38) du mélange gaz porteur-vapeur sèche et/ou à une conduite d'évitement (120).

8. Procédé selon l'une des revendications 1 à 7, **caractérisé en ce qu'**on prévoit un deuxième séparateur de condensats, servant de séparateur de condensats (115) en cas d'urgence/détente, auquel, par l'intermédiaire de la conduite d'évitement (120), on envoie un mélange gaz porteur-vapeur sèche et/ou des vapeurs, le gaz porteur purifié provenant de la sortie des gaz du séparateur de condensats (151) en cas d'urgence/détente étant envoyé au circuit du gaz porteur, et le condensat provenant de la sortie du liquide étant directement ou indirectement envoyé au système de sortie de liquide du premier séparateur de condensats (54) ou encore, dans le cas d'une détente d'urgence, à un puisard d'aspiration (2) installé à l'entrée (1).

9. Procédé selon l'une des revendications 1 à 8, **caractérisé en ce que** le gaz porteur peut être séché dans un sécheur de gaz (82) puis peut être envoyé au circuit fermé de gaz porteur.

10. Procédé selon l'une des revendications 1 à 9, **caractérisé en ce que**, dans le cas d'une perte de gaz porteur dans le circuit fermé de gaz porteur, à partir d'un réservoir de gaz porteur (123) qui lui est raccordé, on fait le plein de gaz porteur.

11. Procédé selon l'une des revendications 1 à 10, **caractérisé en ce que**, en amont de l'orifice d'évacuation du condensat (75), on a disposé un récipient de dégazage (74), à l'aide duquel les substances gazeuses encore dissoutes sont éliminées après la détente.

12. Procédé selon la revendication 11, **caractérisé en ce que**, pour permettre la purge du ou des échangeurs de chaleur (19, 24) d'évaporateur/condensation, le condensat peut, par l'intermédiaire d'équipements mélangeurs spécialisés (193, 198), être envoyé par pompage dans les zones du système devant être purgées.

13. Procédé selon l'une des revendications 1 à 12, **caractérisé en ce que**, dans le cas dans lequel on utilise une oxydation par voie humide, on envoie l'oxygène nécessaire au gaz porteur, cet oxygène provenant d'un réservoir d'oxygène avec évaporateur d'oxygène (132), lequel est commandé par un dispositif de mesure de l'oxygène.

14. Equipement pour traiter un effluent liquide, qui est constitué d'un liquide de base, lequel contient des impuretés essentiellement liquides, avec un équipement mélangeur (14), auquel, par l'intermédiaire d'une conduite d'amenée de gaz porteur (63) un gaz porteur peut être amené, et auquel, par l'intermédiaire d'une conduite d'amenée d'effluent liquide (7) peut être amené un effluent liquide préchauffé, et dans lequel il est possible de répartir dans un mélange gaz porteur-effluent liquide l'effluent liquide préchauffé se trouvant dans le gaz porteur,
comportant au moins un échangeur de chaleur (19, 24) d'évaporateur/condensation, monté en aval d'un équipement mélangeur (14), pour permettre l'évaporation du mélange gaz porteur-effluent liquide dans le but de donner un mélange gaz porteur humide-vapeur, dans lequel le liquide de base est évaporé, et dans lequel les impuretés liquides restent sous forme d'un liquide résiduel,
comportant un séparateur de concentrats (27), monté en aval d'au moins un échangeur de chaleur (19, 24) d'évaporateur/condensation, pour séparer du mélange gaz porteur-vapeur humide le liquide résiduel sous forme d'un concentrat chaud et d'un mélange gaz porteur-vapeur sèche,
comportant un échangeur de chaleur (106) de concentrats/effluent liquide, monté en aval du séparateur de concentrats (27), échangeur de chaleur auquel le concentrat chaud peut être envoyé, pour préchauffer l'effluent liquide envoyé à l'équipement par l'intermédiaire d'une entrée (1),
comportant un séparateur de condensats (54), monté en aval du séparateur de concentrats (27), séparateur de condensats auquel le mélange gaz porteur-vapeur sèche peut être envoyé, après avoir traversé le ou les échangeurs de chaleur (19, 24) d'évaporateur/condensation, et après une condensation partielle qui y est effectuée, dans le but de séparer le liquide de base sous forme d'un condensat, pour séparer le gaz porteur, lequel peut être renvoyé à un équipement mélangeur (14) par l'intermédiaire d'un circuit fermé de gaz porteur, et
comportant un échangeur de chaleur (13) de condensats/effluent liquide, monté en aval du séparateur de condensat (54), échangeur de chaleur qui pour sa part est monté en aval de l'échangeur de chaleur (106) de concentrats/effluent liquide, et auquel il est possible d'envoyer le condensat, pour permettre un préchauffage plus poussé de l'effluent liquide avant son envoi à l'équipement mélangeur (14).

15. Equipement selon la revendication 14, **caractérisé en ce qu'**au moins une zone partielle de la conduite d'amenée allant du séparateur de concentrats (27) au séparateur de condensats (54) est configurée comme une conduite sous pression (38) de mélange de gaz porteur-vapeur sèche, conduite en amont de laquelle est installé un compresseur (37), destiné à augmenter la pression et la température du mélange gaz porteur-vapeur sèche.

16. Equipement selon la revendication 15, **caractérisé en ce que**, dans la conduite sous pression (38), et pour permettre une surveillance de l'exploitation, au moins un dispositif de mesure est disposé, qui fait partie intégrante d'un circuit de régulation.

17. Equipement selon la revendication 15 ou 16, **caractérisé en ce que** la conduite sous pression (38) est, dans le cas d'une chaleur de compression insuffisante, couplable à un groupe producteur de chaleur (207).

18. Equipement selon la revendication 17, **caractérisé en ce que**, pour permettre une mise en marche et/ou un arrêt automatisés du groupe producteur de chaleur (207), on prévoit, côté pilotage du procédé, au moins un actionneur et au moins un dispositif de mesure, dont chacun est couplé à un régulateur.

19. Equipement selon l'une des revendications 14 à 18, **caractérisé en ce que** le gaz porteur est guidé entre le séparateur de condensat (54) et l'équipement mélangeur de gaz porteur (14) dans un circuit distinct de gaz porteur, et peut être envoyé directement et/ou indirectement à une conduite (63) d'amenée du gaz porteur.

20. Equipement selon la revendication 19, **caractérisé en ce qu'**un sécheur de gaz (82) est disposé pour sécher le gaz porteur dans le circuit fermé de gaz porteur.

21. Equipement selon la revendication 20, **caractérisé en ce que**, partant du séparateur de condensats (54), et passant par un réservoir collecteur de condensats (65), au moins une conduite de gaz (96, 79, 84) revient, avec intercalation d'un sécheur de gaz (82), en circuit fermé vers le conduite (63) d'amenée du gaz porteur.

22. Equipement selon l'une des revendications 19 à 21, **caractérisé en ce que** la conduite (63) d'amenée du gaz porteur passe, en venant du séparateur de condensat (54), directement vers l'équipement mélangeur (14).

23. Equipement selon l'une des revendications 19 à 22, **caractérisé en ce qu'**un réservoir de gaz porteur (123), destiné à compenser les pertes de gaz porteur, peut être installé dans le circuit fermé de gaz porteur.

24. Equipement selon l'une des revendications 19 à 23, **caractérisé en ce qu'**un réservoir d'oxygène muni d'un évaporateur d'oxygène (132) peut être monté dans le circuit fermé de gaz porteur pour permettre une oxydation par voie humide.

25. Equipement selon l'une des revendications 14 à 24, **caractérisé en ce qu'**un récipient de dégazage (74) est prévu au niveau de la décharge du condensat (75).

26. Equipement selon l'une des revendications 14 à 25, **caractérisé en ce qu'**une conduite d'évacuation (76) du récipient collecteur, munie d'un robinet-vanne (77), est prévue côté sortie du gaz sur le réservoir collecteur de condensat (65).

27. Equipement selon l'une des revendications 14 à 26, **caractérisé en ce que**
un deuxième séparateur de condensats est prévu au niveau du séparateur de condensats (151) en cas d'urgence/détente, auquel, côté entrée, et par l'intermédiaire d'une conduite d'évitement (120), il est possible d'envoyer des vapeurs provenant du réservoir collecteur de concentrats et/ou un mélange gaz porteur/vapeur sèche, en passant par les conduites d'évitement (140, 143, 146) qui débouchent dans la conduite d'évitement (120), d'une conduite sous pression (38) entre le séparateur de concentrats (27) et le premier séparateur de condensats (54),
le séparateur de condensats (151) en cas d'urgence/détente comporte, côté sortie du gaz, une conduite d'effluent gazeux (167), allant vers une conduite (63) d'amenée du gaz porteur, laquelle va vers l'équipement mélangeur (14), et/ou au moins une conduite (167, 171, 96) allant vers une conduite de gaz (76), formant branchement à partir du réservoir collecteur de condensats (65), d'un circuit fermé distinct de gaz porteur, et
le séparateur de condensats en cas d'urgence/détente comporte en outre, côté sortie du condensat, au moins une conduite de condensats (157, 163) allant vers le réservoir collecteur de condensats (65).

28. Equipement selon la revendication 27, **caractérisé en ce que**, pour une détente d'urgence, un filtre d'air d'évacuation est prévu, la détente s'effectuant à partir de la conduite sous pression (38), en passant par un premier raccordement de conduite (120, 140, 143, 146), le séparateur de condensats (151) en cas d'urgence/détente, un deuxième raccordement de conduite (167, 174, 79, 178, 84, 110), ainsi que le filtre d'air d'évacuation, pour pénétrer dans l'espace qui n'est pas sous la pression d'exploitation, et
le condensat se formant dans le séparateur de condensats (151) en cas d'urgence/détente peut, par l'intermédiaire d'une conduite (157), être envoyé à un puisard d'aspiration (2) installé à l'entrée (1).

29. Equipement selon la revendication 27 ou 28, **caractérisé en ce que**, partant de la conduite d'effluent gazeux (167), on a une conduite d'évitement d'un équipement mélangeur (78), qui arrive dans le circuit de gaz porteur.

30. Equipement selon l'une des revendications 14 à 29, **caractérisé en ce qu'**un compresseur de vapeurs (119) est monté en aval du réservoir collecteur de concentrats (96) dans le cas de la formation de vapeurs.

31. Equipement selon la revendication 30, **caractérisé en ce qu'**au moins un dispositif de mesure d'un circuit de régulation est disposé sur le réservoir collecteur de concentrais (96) pour commander le compresseur de vapeurs (119) et les actionneurs correspondants (122, 150, 159, 161).

32. Equipement selon la revendication 30 ou 31, **caractérisé en ce qu'**au compresseur de vapeurs (110) est raccordée une conduite sous pression (111) pour les vapeurs, cette dernière conduite pouvant être couplée, par l'intermédiaire d'un équipement (116) mélangeur de vapeurs, dans le circuit de mélange gaz porteur-vapeur sèche.

33. Equipement selon l'une des revendications 14 à 32, **caractérisé en ce que**
le réservoir collecteur de concentrats (96) communique, par l'intermédiaire d'une conduite d'évacuation (102), avec l'échangeur de chaleur (106) de concentrats/effluent liquide, et
dans la conduite de sortie (102), on a disposé pour éviter une évacuation par à-coups, au moins un actionneur pouvant être régulé par l'intermédiaire d'au moins un dispositif de mesure.

34. Equipement selon l'une des revendications 14 à 33, **caractérisé en ce que**, pour purger au moins le ou les échangeurs de chaleur (19, 24) d'évaporateur/condensation, un dispositif de purge est prévu, qui peut, par l'intermédiaire d'un équipement mélangeur (196), être inséré dans une conduite de procédé correspondante (15).

## Claims

1. Process for treating a waste liquid which consists of a base liquid having essentially liquid impurities present therein by separating the impurities from the base liquid thus purified for an environmentally friendly disposal or reuse, the separation being carried out by
supplying a carrier gas to the preheated waste liquid and vaporizing this mixture by heat supply to give a wet carrier gas-vapour mixture in such a manner that the base liquid is vaporized and the liquid impurities remain as residual liquid fraction,
supplying this carrier gas-vapour mixture to a concentrate separator (27) in which the residual liquid fraction is separated as concentrate and is passed to disposal/recovery via a concentrate collection vessel (96),
compressing and then cooling the carrier gas-vapour mixture which is freed from residual liquid fraction and thus purified as carrier gas-dry vapour mixture, so that the base liquid is condensed and is separated in a downstream condensate separator (54) and is passed to disposal/reuse via a condensate collection vessel (65),
feeding the carrier gas separated in the condensate separator (54) in a circuit to the waste liquid,
at least a part of the heat supply for preheating the waste liquid in a condensate/waste liquid heat exchanger (13) being achieved by the hot condensate coming from the condensate collection vessel (65),
at least a part of the heat supply for the vaporization to give the wet carrier gas-vapour mixture in at least one evaporator/condensation heat exchanger (19, 24) being achieved by the effluent compressed purified carrier gas-dry vapour mixture, which can at least partially condense owing to the removal of heat in this evaporator/condensation heat exchanger (19, 24), and
a further heat supply for preheating the waste liquid in a concentrate/waste liquid heat exchanger (106) being achieved by the hot concentrate coming from the concentrate collection vessel (96).

2. Process according to Claim 1, **characterized in that** the concentrate/waste liquid heat exchanger (106) is connected upstream of the condensate/waste liquid heat exchanger (13).

3. Process according to Claim 1 or Claim 2,
**characterized in that** the waste liquid in the condensate/waste liquid heat exchanger (13) is heated to as close as possible to the vaporization temperature of the base liquid.

4. Process according to one of Claims 1 to 3,
**characterized in that** the waste liquid is introduced into the carrier gas stream very finely divided in an admixing apparatus (14).

5. Process according to one of Claims 1 to 4,
**characterized in that** two evaporator/condensation heat exchangers (19, 24) are used which, via appropriate connection lines and shutoff elements (181, 182), can be reconnected as a single unit or overall unit.

6. Process according to one of Claims 1 to 5,
**characterized in that** a heat generator (207) can be connected in the carrier gas-dry vapour mixture pressure line (38).

7. Process according to one of Claims 1 to 6,
**characterized in that** vapours arising in the concentrate collection vessel (96) are fed in a compressed state via a vapour admixing apparatus (116) to the carrier gas-dry vapour mixture pressure line (38) and/or to a bypass line (120).

8. Process according to one of Claims 1 to 7,
**characterized in that** a second condensate separator is provided as emergency/relief condensate separator (151) to which a carrier gas-dry vapour mixture and/or vapours is or are fed via the bypass line (120), the purified carrier gas from the gas outlet of the emergency/relief condensate separator (151) being fed to the carrier gas circuit and the condensate from the liquid outlet being fed directly or indirectly to the liquid outlet system of the first condensate separator (54) or, in the case of an emergency pressure relief, to a pump sump (2) at the feed (1).

9. Process according to one of Claims 1 to 8,
**characterized in that** carrier gas can be dried in a gas dryer (82) and then fed to the carrier gas circuit.

10. Process according to one of Claims 1 to 9,
**characterized in that** in the event of loss of carrier gas in the carrier gas circuit, carrier gas can be replenished from a connected carrier gas store (123).

11. Process according to one of Claims 1 to 10,
**characterized in that** a degassing vessel (74) is disposed upstream of the condensate outlet (75), by which degassing vessel (74) gaseous substances which are still dissolved are removed after expansion.

12. Process according to Claim 11, **characterized in that** to purge the evaporator/condensation heat exchanger or exchangers (19, 24), condensate can be pumped into the system regions to be purged via assigned admixing apparatuses (193, 198).

13. Process according to one of Claims 1 to 12,
**characterized in that** when wet oxidation is used, the oxygen required is fed to the carrier gas from an oxygen vessel having an oxygen vaporizer (132) controlled via an oxygen measuring apparatus.

14. Apparatus for treating a waste liquid which consists of a base liquid having essentially liquid impurities present therein, having an admixing apparatus (14) to which a carrier gas can be fed via a carrier gas feed line (63) and a preheated waste liquid can be fed via a waste liquid feed line and in which a distribution of preheated waste liquid in the carrier gas to give a carrier gas-waste liquid mixture can be carried out,
having at least one evaporator/condensation heat exchanger (19, 24) connected downstream of the admixing apparatus (14) for vaporizing the carrier gas-waste liquid mixture to give a wet carrier gas-vapour mixture in which the base liquid is vaporized and the liquid impurities remain as residual liquid fraction,
having a condensate separator (27) connected downstream of the at least one evaporator/condensation heat exchanger (19, 24) for removing the residual liquid as hot concentrate and a carrier gas-dry vapour mixture from the wet carrier gas-vapour mixture,
having a concentrate/waste liquid heat exchanger (106) connected downstream of the concentrate separator (27), to which heat exchanger the hot condensate can be fed to preheat the waste liquid fed to the apparatus via a feed (1),
having a condensate separator (54) connected downstream of the condensate separator (27), to which condensate separator the carrier gas-dry vapour mixture can be fed after passing through the at least one evaporator/condensation heat exchanger (19, 24) and partial condensation there for separating the base liquid as condensate and for separating the carrier gas which can be recycled to the admixing apparatus (14) via a carrier gas circuit, and
having a condensate/waste liquid heat exchanger (13) connected downstream of the condensate separator (54) which heat exchanger is in turn connected downstream of the concentrate/waste liquid heat exchanger (106) and to which the condensate can be fed for further preheating of the waste liquid prior to its feed to the admixing apparatus (14).

15. Apparatus according to Claim 14, **characterized in that** at least one subregion of the feed line from the concentrate separator (27) to the concentrate separator (54) is constructed as carrier gas-dry vapour mixture pressure line (38) having an upstream compressor (37) for pressure and temperature elevation of the carrier gas-dry vapour mixture.

16. Apparatus according to Claim 15, **characterized in that** at least one measuring apparatus which is a component of a control circuit is disposed in the pressure line (38) for operational monitoring.

17. Apparatus according to Claim 15 or Claim 16, **characterized in that** the pressure line (38), in the case of an insufficient heat of compression, can be coupled to a heat generator (207).

18. Apparatus according to Claim 17, **characterized in that**, for automated switching on and/or switching off of the heat generator (207), on the process control side at least one actuator and at least one measuring apparatus are provided each of which is coupled to a controller.

19. Apparatus according to one of Claims 14 to 18, **characterized in that** the carrier gas, between the condensate separator (54) and the carrier gas admixing apparatus (14), is conducted in a separate carrier gas circuit and can be fed directly and/or indirectly to a carrier gas feed line (63).

20. Apparatus according to Claim 19, **characterized in that** a gas dryer (82) for drying carrier gas is disposed in the carrier gas circuit.

21. Apparatus according to Claim 20, **characterized in that**, from the condensate separator (54), starting above a condensate collection vessel (65), at least one gas line (96, 79, 84), with intermediate connection of a gas dryer (82), is fed back in a circuit to the carrier gas feed line (63).

22. Apparatus according to one of Claims 19 to 21, **characterized in that** the carrier gas feed line (63) is conducted directly to the admixing apparatus (14) starting from the condensate separator (54).

23. Apparatus according to one of Claims 19 to 22, **characterized in that** a carrier gas store (123) for compensating for carrier gas losses can be connected into the carrier gas circuit.

24. Apparatus according to one of Claims 19 to 23,
**characterized in that**, for a wet oxidation, an oxygen vessel having an oxygen vaporizer (132) can be connected in the carrier gas circuit.

25. Apparatus according to one of Claims 14 to 24, **characterized in that** a degassing vessel (74) is provided at the condensate outlet (75).

26. Apparatus according to one of Claims 14 to 25, **characterized in that** a collection vessel off-gas line (76) having a shutoff valve (77) is provided at the condensate collection vessel (65) on the gas outlet side.

27. Apparatus according to one of Claims 14 to 26, **characterized in that** a second condensate separator is provided as emergency/relief condensate separator (151) to which, on the inlet side via a bypass line (120), vapours from the concentrate collection vessel and/or carrier gas-dry vapour mixture can be fed via bypass lines (140, 143, 146) opening into the bypass line (120) to a pressure line (38) between the concentrate separator (27) and the first condensate separator (54),
**in that** the emergency/relief condensate separator (151) has on the gas outlet side an off-gas line (167) to a carrier gas feed line (63) to the admixing apparatus (14) and/or has at least one line (167, 171, 96) to a gas line (76) which is branched off from the condensate collection vessel (65) and is of a separate carrier gas circuit, and
**in that** the emergency/relief condensate separator in addition has on the condensate outlet side at least one condensate line (157, 163) to the condensate collection vessel (65).

28. Apparatus according to Claim 27, **characterized in that** for an emergency expansion an exhaust air filter is provided, the expansion taking place starting from the pressure line (38) via a first line assembly (120, 140, 143, 146), the emergency/relief condensate separator (151), a second line assembly (167, 174, 79, 178, 84, 110) and the exhaust air filter into the space which is not pressurized at operating pressure, and
**in that** the condensate arising in the emergency/relief condensate separator (151) can be fed via a line (157) to a pump sump (2) at the feed (1).

29. Apparatus according to Claim 27 or Claim 28,
**characterized in that** a bypass line is branched off from the off-gas line (167) to an admixing apparatus (78) in the carrier gas circuit.

30. Apparatus according to one of Claims 14 to 29, **characterized in that** a vapour compressor (119) is connected downstream of the concentrate collection vessel (96) in the event of vapour formation.

31. Apparatus according to Claim 30, **characterized in that** at least one measuring apparatus of a control circuit for controlling the vapour compressor (119) and the corresponding actuators (122, 150, 159, 161) are disposed on the concentrate collection vessel (96).

32. Apparatus according to Claim 30 or 31,
**characterized in that** a vapour pressure line (111) is connected to the vapour compressor (110), which vapour pressure line can be coupled to the carrier gas-dry vapour mixture circuit via a vapour admixing apparatus (116).

33. Apparatus according to one of Claims 14 to 32, **characterized in that**
the concentrate collection vessel (96) is connected via an outlet line (102) to the concentrate/waste liquid heat exchanger (106), and
**in that** at least one actuator which can be controlled via at least one measuring apparatus is disposed in the outlet line (102) to avoid a pulsed outlet.

34. Apparatus according to one of Claims 14 to 33, **characterized in that** to purge at least the evaporator/condensation heat exchanger or exchangers (19, 24), a purging apparatus is provided which can be coupled via an admixing apparatus (193) to a corresponding process controller (15).
